# EUROPÄISCHE PATENTSCHRIFT

(11) **EP 2 912 741 B1**
(45) Veröffentlichungstag und Bekanntmachung des Hinweises auf die Patenterteilung: **12.09.2018**
(21) Anmeldenummer: 13780133.8
(22) Anmeldetag: 22.10.2013
(51) Int. Cl.: H02J 3/34, H02M 7/44, H02J 9/06, H02J 3/26, H02J 3/38

(54) **WECHSELRICHTER, VERFAHREN ZUM BETREIBEN EINES WECHSELRICHTERS UND ENERGIEVERSORGUNGSANLAGE MIT EINEM WECHSELRICHTER**
INVERTER, METHOD FOR OPERATING AN INVERTER AND ENERGY SUPPLY INSTALLATION WITH AN INVERTER
ONDULEUR, PROCÉDÉ FAIRE FONCTIONNER UN ONDULEUR ET INSTALLATION D'ALIMENTATION EN ÉNERGIE COMPRENANT UN ONDULEUR

(30) Priorität: 23.10.2012 DE 102012110110
(43) Veröffentlichungstag der Anmeldung: 02.09.2015
(73) Patentinhaber: SMA Solar Technology AG, 34266 Niestetal (DE)
(72) Erfinder: ALLERT, Claus, 34260 Kaufungen (DE); BÜLO, Thorsten, 34121 Kassel (DE); HOPF, Markus, 34314 Espenau (DE)
(74) Vertreter: Lahnor, Peter
(86) Internationale Anmeldenummer: PCT/EP2013/072075
(87) Internationale Veröffentlichungsnummer: WO 2014/064108

(56) Entgegenhaltungen:
- EP-A2- 0 891 029
- EP-A2- 1 928 081
- US-A1- 2011 278 931
- US-B1- 6 317 346

## Beschreibung

Die Erfindung betrifft einen Wechselrichter, insbesondere einen Solar- oder Batteriewechselrichter, mit mindestens einem Gleichstrom- (DC - direct current) Eingang zur Verbindung mit einer Energieerzeugungseinrichtung und/oder einem Energiespeicher und einem mehrphasigen Wechselstrom- (AC - alternating current) Ausgang zur Verbindung mit einem lokalen Energieverteilungsnetz, das an ein ebenfalls mehrphasiges übergeordnetes Energieversorgungsnetz angekoppelt ist. Die Erfindung betrifft weiterhin ein Verfahren zum Betreiben eines derartigen Wechselrichters sowie eine Energieversorgungsanlage mit einem Wechselrichter.

Wechselrichter dieser Art werden beispielsweise in Verbindung mit einer gebäudeintegrierten Photovoltaik-Anlage verwendet. Die von einem Photovoltaik (PV) - Generator der Photovoltaik-Anlage in Form von Gleichstrom erzeugte Energie wird von dem Wechselrichter in netzkonformen Wechselstrom umgewandelt und in die mehreren (meist drei) Phasen des lokalen Energieverteilungsnetzes eingespeist, das in diesem Zusammenhang auch als Gebäudeinstallation bezeichnet wird. Hierbei wird unter einem Wechselrichter auch eine Mehrzahl von Umwandlungsvorrichtungen verstanden, die gemeinsam in ein lokales Energieverteilungsnetz einspeisen.

Die vom Photovoltaik-Generator erzeugte Energie kann so über die Gebäudeinstallation zur Versorgung von lokalen Verbrauchern verwendet werden. Überschüssige Energie wird an einem Netzübergabepunkt aus dem lokalen Energieverteilungsnetz in das übergeordnete Energieversorgungsnetz eingespeist. Umgekehrt fließt Energie aus dem übergeordneten Energieversorgungsnetz in das lokale Energieverteilungsnetz, falls der Leistungsbedarf von Verbrauchern im lokalen Energieverteilungsnetz die von der lokalen Energieerzeugungseinrichtung bereitgestellte elektrische Leistung übersteigt.

Alternativ oder zusätzlich zur lokalen Energieerzeugungseinrichtung kann ein lokaler Energiespeicher, beispielsweise eine Batterie vorgesehen sein, wobei analog zum Fall der Energieerzeugungseinrichtung Energie über den Wechselrichter in das lokale Energieversorgungsnetz abgegeben werden kann. Anordnungen mit einem derartigen Energiespeicher dienen der zumindest zeitweisen Sicherstellung der Energieversorgung im lokalen Energieverteilernetz auch bei Ausfall des übergeordneten Energieversorgungsnetzes. Sie können auch genutzt werden, um einen Bezug von Energie aus dem übergeordneten Energieversorgungsnetz abhängig von Parametern wie dem Energiepreis oder der Verfügbarkeit von Energie kontrollieren zu können.

Im einfachsten und üblichen Fall wird dabei von dem Wechselrichter eine gleiche Leistung in die einzelnen Phasen des lokalen Energieverteilernetzes eingebracht. Da jedoch die an unterschiedlichen Phasen des lokalen Energieverteilungsnetzes angeschlossenen Verbraucher oder ggf. vorhandenen zusätzlich vorhandenen (ggf. einphasigen) Erzeugungsanlagen üblicherweise die Phasen nicht gleichmäßig belasten, führt dieses zu einer unsymmetrischen Belastungssituation der Phasen des übergeordneten Energieversorgungsnetzes am Netzübergabepunkt. Aus der Druckschrift EP 2 348 597A1 ist zur Verhinderung einer derartigen Schieflast am Netzübergabepunkt bekannt, den Leistungs- oder Stromfluss auf den einzelnen Phasen am Netzübergabepunkt zu ermitteln und einen Wechselrichter so anzusteuern, dass dieser die von einer lokalen Energieversorgungseinrichtung erzeugte Leistung nicht gleichmäßig in die Phasen des lokalen Energieverteilungsnetzes einspeist, sondern so, dass sich am Netzübergabepunkt eine möglichst symmetrische Einspeise- oder Entnahmesituation ergibt. Auch die Schrift WO 2011/141807 A2 befasst sich mit einer Ausgleichsschaltung zur Kompensation einer unausgeglichenen Leistungsentnahme durch einen an einem Netz angeschlossenen Verbraucher.

Aus der Schrift EP 0 891 029 A2 ist ein Verfahren zum Betrieb einer Leitung beschrieben, in dem im Fall eines einphasigen Fehlers in einer mehrphasigen Leitung die fehlerbehaftete Leitung in einem Abschnitt beidseitig getrennt wird und ein das Nullsystem wiederherstellender Kompensationsstrom über eine Überbrückungsleitung an dem fehlerhaften Abschnitt vorbeigeführt wird, Darüber hinaus ist es bekannt, Wechselrichter so einzurichten und zu betreiben, dass im Fall eines Ausfalls des übergeordneten Energieversorgungsnetzes die lokal erzeugte und/oder gespeicherte Energie bedarfsgerecht in die einzelnen Phasen des lokalen Energieverteilungsnetzes eingespeist wird, um einen Betrieb der Verbraucher im lokalen Energieverteilungsnetzes zu gewährleisten.

Mit den genannten Verfahren ist es nicht möglich, eine möglichst lang andauernde Versorgung der an das lokale Energieverteilungsnetz angeschlossenen Verbraucher sicherzustellen, wenn nicht alle, sondern nur einige Phasen, beispielsweise eine oder zwei von drei Phasen des übergeordneten Energieversorgungsnetzes ausfallen.

Es ist eine Aufgabe der vorliegenden Erfindung, ein Betriebsverfahren für einen Wechselrichter bzw. eine Energieversorgungsanlage mit einem Wechselrichter zu schaffen, bei dem eine Versorgung von lokalen Verbrauchern in ein lokales Energieverteilungsnetz auch dann gegeben ist, wenn ein Teil der Phasen eines mehrphasigen Energieversorgungsnetzes ausfällt, also eine sogenannte Teilinselsituation vorliegt.

Die Erfindung löst diese Aufgabe durch eine Vorrichtung gemäß Anspruch 1 und ein Verfahren gemäß Anspruch 6. Alle technischen Merkmale der unabhängigen Ansprüche sind erforderlich und nicht optional, unabhängig von dem widersprechenden Aussagen in den folgenden Textpassagen. Bevorzugte Ausführungsformen werden in den abhängigen Ansprüchen beschrieben.

Ein erfindungsgemäßer Wechselrichter der eingangs genannten Art zeichnet sich dadurch aus, dass er einen Steueranschluss zur Verbindung mit der Schalteinrichtung aufweist, derart, dass über den Steueranschluss selektiv einzelne Phasen des lokalen Energieverteilungsnetz mit entsprechenden Phasen des Energieversorgungsnetzes verbindbar sind bzw. voneinander trennbar sind, und der Wechselrichter dazu eingerichtet ist, bei einem Netzfehler mindestens einer, aber nicht aller Phasen des Energieversorgungsnetzes über den Steueranschluss die mindestens eine fehlerbehaftete Phase des Energieversorgungsnetzes von der entsprechenden Phase des lokalen Energieverteilungsnetz zu trennen und die mindestens eine abgetrennte Phase des lokalen Energieverteilungsnetzes mit netzkonformer Wechselspannung zu beaufschlagen und dabei von einer mit dem Wechselrichter verbundenen Energieerzeugungseinrichtung und/oder einer Batterie bereitgestellte Leistung zur Beaufschlagung der mindestens einen abgetrennten Phase des lokalen Energieverteilungsnetzes zu verwenden.

Tritt eine Teilinselsituation, also ein Fehler an einer oder mehreren, nicht jedoch allen Phasen des übergeordneten Energieversorgungsnetzes auf, kann das lokale Energieverteilungsnetz im Hinblick auf diese Phase oder diese Phasen vom Energieversorgungsnetzes abgekoppelt werden und daraufhin vom Wechselrichter mit netzkonformen und insbesondere auch im Hinblick auf die Phasenlage korrektem Wechselstrom beaufschlagt werden, so dass die an diese Phase angeschlossenen Verbraucher im lokalen Energieverteilungsnetz möglichst unterbrechungsfrei weiter betrieben werden können.

In bevorzugten Ausgestaltungen des Wechselrichters sind dabei die Schalteinrichtung und/oder eine Netzüberwachungseinrichtung, die zur selektiven Identifikation des Netzfehlers auf jeder einzelnen der Phasen des Energieversorgungsnetzes eingerichtet ist, in den Wechselrichter integriert. Auf diese Weise wird ein kompakter Systemaufbau erzielt. In einer weiteren bevorzugten Ausgestaltung des Wechselrichters ist ein Signalanschluss zur Verbindung mit einer externen Netzüberwachungseinrichtung vorgesehen. Dieses ist vorteilhaft, um eine eventuell schon vorhandene Netzüberwachungseinrichtung nutzen zu können.

Bei weiteren bevorzugten Ausgestaltungen des Wechselrichters ist dieser dazu eingerichtet, bevorzugt von der Energieerzeugungseinrichtung und/oder dem Energiespeicher bereitgestellte Leistung und/oder aus einer nicht abgetrennten Phase des lokalen Energieverteilungsnetz entnommene Leistung zur Beaufschlagung der mindestens einen abgetrennten Phase des lokalen Energieverteilungsnetz zu verwenden. In allen Fällen wird die Fähigkeit des Wechselrichters, Wechselstrom- bzw. Wechselspannung mit der benötigten Phasenlage bereit zu stellen, ausgenutzt, um die Verbraucher auf der oder den abgetrennten Phasen weiter zu betreiben. Dabei kann auf lokal erzeugte oder gespeicherte Energie zurückgegriffen werden oder, z.B. falls diese nicht ausreichend vorhanden ist, auch auf Energie, die anderen, nicht fehlerbehafteten Phasen des Energieversorgungsnetzes entnommen wird. Im Rahmen der Anmeldung ist unter einem "Weiterbetreiben" der Verbraucher zu verstehen, dass diese für einen Zeitraum mit Energie versorgt werden können, der deutlich länger ist als die Zeitdauer einer Netzperiode und beispielsweise im Bereich von einigen Sekunden und bevorzugt einigen Minuten oder länger liegt.

Wechselrichterbrücken ist üblicherweise ein Zwischenkreis mit einer Anordnung von (Puffer)-Kondensatoren vorgeschaltet, um die von der Gleichstromquelle bereitgestellte Gleichspannung trotz der beim Umwandeln in Wechselstrom erfolgenden gepulsten Stromentnahme zu glätten und dadurch den maximal entnehmbaren Spitzenstromimpuls zu erhöhen. Die Zwischenkreis-Kondensatoranordnung dient somit der Zwischenspeicherung von Energie innerhalb einer Netzperiode, wobei die Kapazität einer solchen Zwischenkreis-Kondensatoranordnung für ein zeitweises Weiterbetreiben der Verbraucher im Sinne der Anmeldung nicht ausreichend ist. Im Rahmen der Anmeldung stellt eine Zwischenkreis-Kondensatoranordnung somit keinen zum Weiterbetreiben der Verbraucher geeigneten Energiespeicher dar.

Ein erfindungsgemäßes Verfahren zum Betreiben eines Wechselrichters weist die folgenden Schritte auf: Es wird überwacht, ob bei mindestens einer Phase, aber nicht allen Phasen des Energieversorgungsnetzes ein Netzfehler vorliegt. Falls ein Netzfehler vorliegt, wird die Schalteinrichtung betätigt und die mindestens eine fehlerbehaftete Phase des Energieversorgungsnetzes von der entsprechenden Phase des lokalen Energieverteilungsnetzes abgekoppelt. Anschließend wird die mindestens eine abgetrennte Phase des lokalen Energieverteilungsnetzes durch den Wechselrichter mit netzkonformer Wechselspannung beaufschlagt, wobei die benötigte Leistung von der Energieerzeugungseinrichtung und/oder von der Batterie entnommen und vom Wechselrichter von Gleich- in Wechselstrom umgewandelt wird. Es ergeben sich hierbei die bereits zuvor im Zusammenhang mit dem Wechselrichter beschriebenen Vorteile.

Bevorzugt kann dabei überschüssige Leistung der Energieerzeugungseinrichtung vom Wechselrichter in nicht abgetrennte Phasen des lokalen Energieverteilungsnetzes eingespeist werden.

In einer vorteilhaften Ausgestaltung des Verfahrens wird fehlende Leistung zur Beaufschlagung der mindestens einen abgetrennten Phase des lokalen Energieverteilungsnetz vom Wechselrichter aus mindestens einer nicht abgetrennten Phasen des lokalen Energieverteilungsnetz entnommen und in die mindestens eine abgetrennte Phasen eingespeist. Bevorzugt erfolgt die Übertragung von Leistung aus der mindestens einen nicht abgetrennten Phase in die mindestens eine abgetrennte Phase des lokalen Energieverteilungsnetzes über einen Zwischenkreis des Wechselrichters. In diesem Fall erfolgt also zunächst eine Gleichrichtung von Strom aus einer nicht abgetrennten Phase und dann die Umwandlung in Wechselstrom für die abgetrennte Phase. Es wird so die Fähigkeit des Wechselrichters, eine gewünschte Phasenlage an einem Ausgang einzustellen, ausgenutzt, um die abgetrennte Phase auch im Hinblick auf die Phasenlage mit netzkonformer Wechselspannung zu beaufschlagen.

In weiteren vorteilhaften Ausgestaltungen des Verfahrens wird die Entnahme von Leistung aus dem Energiespeicher so gesteuert, dass die Belastung der nicht abgetrennten Phasen unter einem Belastungsschwellwert, insbesondere unter einer Auslöseschwelle einer Sicherung, verbleibt. Das erfindungsgemäße Verfahren bietet den Vorteil, dass zur Versorgung der Verbraucher der abgetrennten Phasen die benötigte Leistung aus den verschiedenen genannten Quellen gemischt entnommen werden kann. Die Entnahme von Leistung aus dem Energiespeicher kann dann vorteilhaft nach Bedarf verwendet werden, um eine Überlastung der nicht abgetrennten Phasen zu verhindern. In weiteren vorteilhaften Ausgestaltungen können andere Kriterien alternativ oder zusätzlich berücksichtigt werden, um die Verteilung der Leistung auf die verschiedenen Quellen zu steuern. So kann der der Anteil der Leistung, der den nicht abgetrennten Phasen entnommen wird, in Abhängigkeit des Ladezustandes des Energiespeichers bzw. der Leistungsfähigkeit der Energieerzeugungseinrichtung, bzw. der Belastbarkeit der den nicht abgetrennten Phasen zugeordneten Leistungsteilen des Wechselrichters bestimmt werden.

Eine erfindungsgemäße Energieversorgungsanlage ist mehrphasig und weist mindestens einen vorstehend beschriebenen Wechselrichter auf, mindestens eine Energieerzeugungseinrichtung und/oder einen Energiespeicher, sowie eine Schalteinrichtung, über die die Energieversorgungsanlage an ein ebenfalls mehrphasiges übergeordnetes Energieversorgungsnetz ankoppelbar ist, und eine Netzüberwachungseinrichtung. Die Energieversorgungsanlage zeichnet sich dadurch aus, dass eine Steuereinrichtung vorgesehen ist, die dazu eingerichtet ist, abhängig von Signalen der Netzüberwachungseinrichtung die Schalteinrichtung und/oder den Wechselrichter zur Durchführung eines der zuvor genannten Verfahren anzusteuern. Auch hierbei werden die bereits zuvor genannten Vorteile erzielt. Dabei kann ein mehrphasiger Wechselrichter eingesetzt werden, in den ggf. die genannte Steuereinrichtung integriert ist. Es ist aber auch möglich, dass die Steuereinrichtung eine separate Komponente der Energieversorgungsanlage ist, die einen mehrphasigen Wechselrichter oder auch mehrere einphasige Wechselrichter entsprechend ansteuert, um das erfindungsgemäße Verfahren durchzuführen.

Die Erfindung wird nachfolgend anhand von Ausführungsbeispielen mithilfe von zwei Figuren näher erläutert. Die Figuren zeigen:
- Fig. 1: eine schematische Darstellung einer Anordnung mit einem Wechselrichter zur Versorgung von Verbrauchern über einen Energieverteilungsnetz, das mit einem Energieversorgungs-netz gekoppelt ist und
- Fig. 2: ein Flussdiagramm eines Verfahrens zum Betreiben eines Wechselrichters.

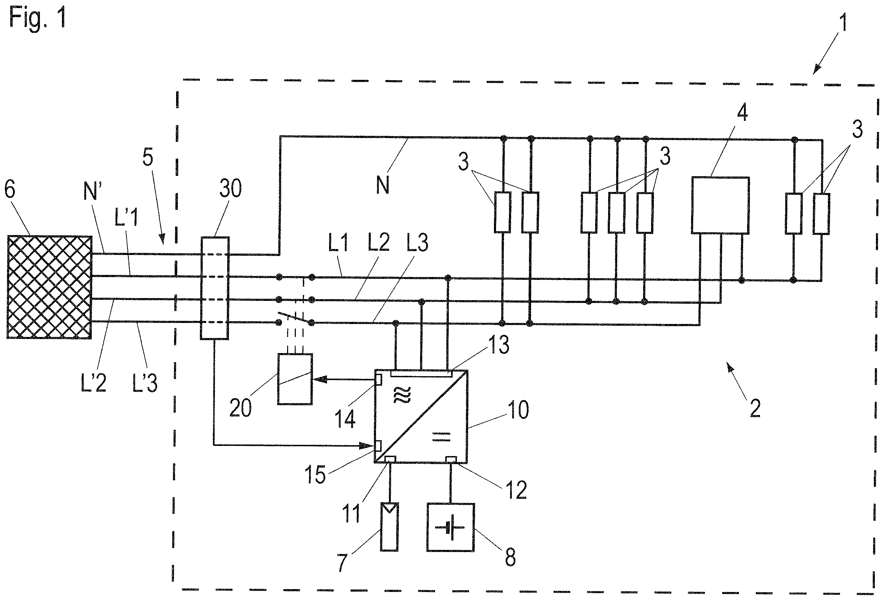

Fig. 1 zeigt eine Energieversorgungsanlage zur Versorgung von elektrischen Verbrauchern in einem Gebäude in Form eines Blockschaltbildes. Dargestellt ist ein Gebäude 1 mit einem lokalen Energieverteilungsnetz 2, über das Verbraucher 3, 4 mit Strom versorgt werden. Das lokale Energieverteilungsnetz 2 ist hier beispielhaft als ein dreiphasiges Energieversorgungsnetz mit Phasen L1, L2 und L3 sowie einem Nullleiter N dargestellt. Ein ggf. vorhandener Schutzleiter ist aus Gründen der Übersichtlichkeit nicht angegeben. Verteilt im Gebäude 1 sind an das Energieverteilungsnetz 2 einphasige Verbraucher 3 sowie hier beispielhaft ein dreiphasiger Verbraucher 4 angeschlossen.

Das lokale Energieverteilungsnetz 2 ist an einem Netzübergabepunkt 5 mit einem übergeordneten Energieversorgungsnetz 6 gekoppelt. Dieses stellt ebenso drei Phasen, einen Nullleiter und ggf. einen Schutzleiter bereit. Zur Unterscheidung sind die Phasen und der Nullleiter des übergeordneten Energieversorgungsnetzes 6 mit den Bezugszeichen L1', L2', L3' und N' versehen. Das Blockschaltbild der Fig. 1 zeigt nur die im Rahmen der Anmeldung wesentlichen Elemente der elektrischen Installation im und am Gebäude 1. Es versteht sich, dass im lokalen Energieverteilungsnetz 2 ebenso wie im übergeordneten Energieversorgungsnetz 6 am oder vor dem Netzübergabepunkt weitere Schalt- und/oder Sicherungselemente angeordnet sein können.

Weiterhin sind am oder im Gebäude 1 ein Photovoltaik (PV) -Generator als lokale Energieerzeugungseinrichtung 7 und eine Batterie als Energiespeicher 8 vorgesehen. Der einfachen Darstellung halber werden nachfolgend die Bezeichnungen PV-Generator 7 und Batterie 8 benutzt. Der PV-Generator 7 und die Batterie 8 sind mit einem Wechselrichter 10 verbunden, der zu diesem Zweck DC-Anschlüsse 11, 12 bereitstellt. Es wird darauf hingewiesen, dass die Verwendung eines PV-Generators 7 zusammen mit einer Batterie 8 optional ist und ein erfindungsgemäßes Verfahren auch durchgeführt werden kann, wenn nur eines dieser beiden Elemente, also eine Energieerzeugungseinrichtung oder ein Energiespeicher, vorhanden sind. Der Wechselrichter 10 ist mehrphasig ausgeführt, vorliegend ebenso wie das Energieverteilungsnetz 2 und das Energieversorgungsnetz 6 dreiphasig. Der Wechselrichter 10 ist über einen AC-Anschluss 13 mit den drei Phasen L1, L2, L3 des Energieverteilungsnetzes 2 verbunden.

Weiterhin weist der Wechselrichter 10 einen mit einer internen Steuereinrichtung verbundenen Steueranschluss 14 für eine AC-Schalteinrichtung 20 auf. Diese AC-Schalteinrichtung 20 weist drei separat unabhängig voneinander betätigbare Schaltstrecken auf, mit denen jeweils die entsprechenden Phasen L1', L2' und L3' des übergeordneten Energieversorgungsnetzes 6 mit den Phasen L1, L2 und L3 des lokalen Energieverteilungsnetzes 2 verbunden sind. Die AC-Schalteinrichtung 20 kann beispielsweise durch drei separate AC-Schütze realisiert sein. Auch hier versteht es sich, dass im Bereich der Verbindung zwischen dem Wechselrichter 10 und dem PV-Generator 7 und/oder der Batterie 8 weitere Schalt-, Sicherungs- oder Steuervorrichtungen vorgesehen sein können. Diese weiteren Einrichtungen können sowohl im Wechselrichter integriert sein als auch als außerhalb des Wechselrichters angeordnete Einrichtungen, zum Beispiel in einer externen Schaltbox zusammengefasst, realisiert sein.

Weiterhin ist eine Netzüberwachungseinrichtung 30 vorgesehen, die überprüft, an welchen der Phasen L1', L2' und L3' des übergeordneten Energieversorgungsnetzes 6 eine netzkonforme Wechselspannung bereitsteht. Im Rahmen dieser Anmeldung ist dabei unter "netzkonform" zu verstehen, dass relevante Netzparameter wie beispielsweise die Amplitude und der Effektivwert der Spannung in einem Wertebereich liegt, der für einen ordnungsgemäßen Betrieb der Verbraucher 3, 4 erforderlich ist. Ergänzend wird auch auf die Norm EN 50160 verwiesen. Ein nicht netzkonformer Zustand wird im Folgenden auch als Netzfehler bezeichnet. Ein solcher Netzfehler liegt insbesondere auch dann vor, wenn ggf. vom Wechselrichter 10 vorgenommene Maßnahmen zur Netzstützung, beispielsweise eine Blindstromeinspeisung, in die betroffenen Phasen nicht ausreichen, um die Netzparameter im geforderten Bereich zu stabilisieren. Es kann vorgesehen sein, für einen bestimmten Zeitraum, beispielsweise im Bereich von Sekunden, zunächst eine Maßnahme zur Netzstützung auszuführen. Sollte diese Maßnahme nicht erfolgreich sein, oder der Fehlerzustand länger als der genannte Zeitraum anhalten, wird angenommen, dass ein Netzfehler im Sinne der Anmeldung vorliegt.

Ein Zustand des Energieversorgungsnetzes 6, in dem alle Phasen netzkonform bereitgestellt werden, wird als Normalbetriebszustand bezeichnet. Zeigen eine oder mehrere, aber nicht alle Phasen einen Netzfehler, liegt eine Teilinselsituation vor. Der von der Netzüberwachungseinrichtung 30 erfasste Zustand der einzelnen Phasen L1', L2' und L3' wird über eine Signalleitung, beispielsweise eine Datenleitung oder eine Kommunikationsverbindung, über einen Signalanschluss 15 an den Wechselrichter 10 übertragen. Auch ist es möglich, eine derartige Netzüberwachungseinrichtung in den Wechselrichter 10 zu integrieren.

In alternativ ausgestalteten Energieversorgungsanlagen kann anstelle des Wechselrichters 10 mit integrierter Steuereinrichtung auch vorgesehen sein, dass ein mehrphasiger oder mehrerer einphasige Wechselrichter mit einer separaten Steuereinrichtung verbunden sind, die den oder die Wechselrichter ebenso wie die Schalteinrichtung 20 abhängig von Signalen bzw. Daten oder Informationen der Netzüberwachungseinrichtung 30 ansteuert.

Im Folgenden wird zunächst davon ausgegangen, dass sich das Energieversorgungsnetz 6 im Normalbetriebszustand befindet, in dem es elektrische Leistung auf allen drei Phasen L1', L2' und L3' entweder bereitstellt oder auch aufnehmen kann. Vom PV-Generator 7 bereitgestellte Leistung wird über den Wechselrichter 10 in das lokale Energieverteilungsnetz 2 eingespeist. Bei einem Überangebot an lokal erzeugter Leistung durch den PV-Generator 7 im Vergleich zum Verbrauch der Verbraucher 3, 4 erfolgt eine Abgabe der überschüssigen Leistung in das Energieversorgungsnetz 6. Reicht die lokal erzeugte Leistung des PV-Generators 7 nicht zur Versorgung der Verbraucher 3, 4 aus, wird im umgekehrten Fall zusätzlich Leistung aus dem Energieversorgungsnetz 6 entnommen. In beiden Fällen kann der Wechselrichter 10 vorteilhaft dazu eingerichtet sein, eine unsymmetrische Belastung der Phasen L1, L2 und L3 im lokalen Energieverteilungsnetz 2 so auszugleichen, dass eine symmetrische Entnahme- oder Einspeisesituation an den Phasen L1', L2' und L3' am Netzübergabepunkt 5 vorliegt. Ggf. kann auch ein Strom in oder aus der Batterie 8 genutzt werden, um einen solchen Ausgleich zu erzielen. Auch kann eine zeitweise verstärkte Leistungsentnahme aus dem Energieversorgungsnetz 6 oder ein verstärktes Einspeisen in das Energieversorgungsnetz 6 abhängig von Stromkosten und/oder Anforderungen der Betreiber des Energieversorgungsnetzes 6 erfolgen.

In einem Fehlerbetriebszustand, in dem das übergeordnete Energieversorgungsnetz 6 im Umfang aller seiner Phasen L1', L2' und L3' nicht zur Verfügung steht, kann eine Versorgung der Verbraucher 3, 4 über den Wechselrichter 10 aus dem PV-Generator 7 und/oder der Batterie 8 erfolgen, solange dieses im Hinblick auf die zur Verfügung stehende Leistung möglich ist.

In einer Teilinselsituation für das Gebäude 1, bei dem nicht bei allen Phasen L1', L2' und L3' des übergeordneten Energieversorgungsnetzes 6, sondern nur bei einem Teil der Phasen ein Netzfehler vorliegt, erfolgt eine Versorgung der Verbraucher 3, 4 auf die im Folgenden dargestellte anmeldungsgemäße Weise. Gesteuert vom Wechselrichter 10 wird mittels der AC-Schalteinrichtung 20 die mindestens eine fehlerhafte Phase des Energieversorgungsnetzes 6 von dem Energieverteilungsnetz 2 getrennt. Dieses ist beispielhaft in der Fig. 1 für die Phase L3' des Energieversorgungsnetzes 6 dargestellt. Die nicht von dem Netzfehler betroffenen Phasen, hier die Phasen L2' und L3', bleiben mit den entsprechenden Phasen des Energieverteilungsnetzes 2 verbunden.

Die abgekoppelte Phase, hier die Phase L3, oder auch die abgekoppelten Phasen des lokalen Energieverteilungsnetzes 2 werden darauf hin vom Wechselrichter 10 mit netzkonformen Wechselstrom beaufschlagt, so dass die an diese Phase angeschlossenen einphasigen Verbraucher 3 ebenso wie der dreiphasige Verbraucher 4 möglichst unterbrechungsfrei weiter betrieben werden können.

Die zur Versorgung der fehlerhaften Phase oder Phasen, hier der Phase L3, benötigte Leistung stammt bevorzugt von dem PV-Generator 7. Sollte darüber hinaus ein Überschuss an von dem PV-Generator 7 lokal erzeugter Leistung vorliegen, kann diese vom Wechselrichter 10 in nicht betroffene, nicht abgetrennte Phasen, hier die Phasen L1 und L2, eingespeist werden. Falls im umgekehrten Fall die lokal durch den PV-Generator 7 erzeugte Leistung nicht zur Versorgung der einen oder mehreren abgetrennten Phasen ausreicht, kann vorgesehen sein, Energie zusätzlich aus der Batterie 8 zu entnehmen, wenn diese vorhanden ist. Alternativ kann vorgesehen sein - entweder wenn keine Batterie 8 vorhanden ist oder ein Entladen der Batterie 8 nicht gewünscht ist - fehlende Energie aus den nicht vom Fehler betroffenen Phasen aus dem Energieversorgungsnetz 6 zu entnehmen. Es wird auf diese Weise in jedem Fall erreicht, dass im lokalen Energieverteilungsnetz 2 auch in einer Teilinselsituation, in der eine oder mehrere, nicht jedoch alle Phasen L1', L2', L3' des übergeordneten Energieversorgungsnetzes fehlerbehaftet sind, die angeschlossenen Verbraucher 3, 4 weiter betrieben werden können.

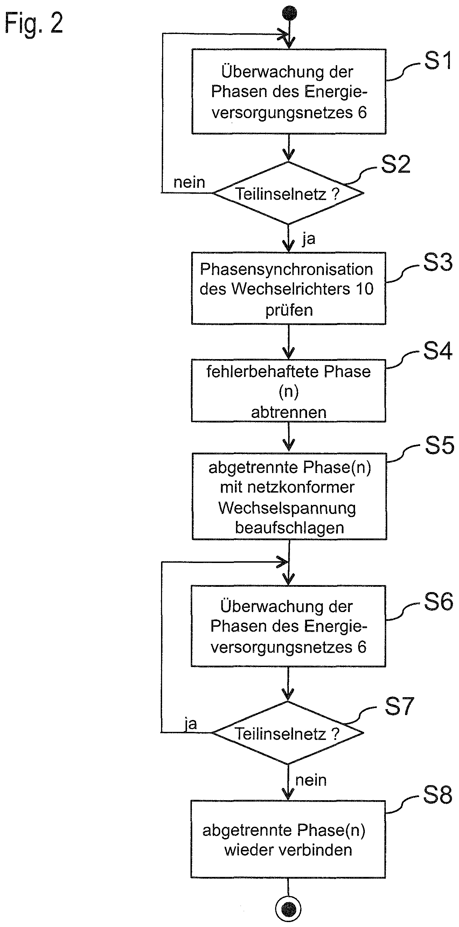

In Fig. 2 ist ein anmeldungsgemäßes Verfahren zum Betreiben eines Wechselrichters zur Versorgung von Verbrauchern, die an ein mehrphasiges lokales Energieverteilungsnetz angeschlossen sind, dargestellt. Das in Fig. 2 dargestellte Verfahren kann beispielsweise von der in Fig. 1 gezeigten Energieversorgungsanlage und insbesondere mit dem in Fig. 1 dargestellten Wechselrichter 10 durchgeführt werden. Beispielhaft wird daher im Folgenden auf Fig. 1 Bezug genommen.

In einem ersten Schritt S1 wird das mehrphasige übergeordnete Energieversorgungsnetz 6 darauf hin überprüft, ob alle bereitgestellten Phasen, hier die Phasen L1', L2' und L3', netzkonforme Wechselspannung bereitstellen. Dieses kann beispielsweise von der Netzüberwachungseinrichtung 30, die im Bereich des Netzübergabepunktes 5 angeordnet ist, erfolgen. Alternativ ist es möglich, die Überwachung der Phasen L1', L2' und L3' innerhalb des Wechselrichters 10 durchzuführen.

In einem nächsten Schritt S2 wird das Ergebnis aus dem Schritt S1 überprüft. Falls ein Normalzustand vorliegt, in dem das übergeordnete Energieversorgungsnetz 6 auf allen Phasen L1', L2' und L3' netzkonforme Wechselspannung bereitstellt, verzweigt das Verfahren zurück zum Anfang, um die Überprüfung kontinuierlich durchzuführen. Wird im Schritt S2 festgestellt, dass zumindest eine, nicht jedoch alle der Phasen L1', L2' und L3' einen Fehlerzustand zeigen, verzweigt das Verfahren weiter zu einem Schritt S3.

Der Wechselrichter 10 bildet üblicherweise aus einer der drei Phasen des übergeordneten Energieversorgungssystems 6 ein Referenzsignal, das als Sollgröße für das Regelverfahren eingesetzt wird, mit dem der Wechselrichter 10 die Phasenlage und damit die Frequenz des von ihm erzeugten Wechselstroms an den AC-Ausgängen 13 bestimmt. In dem Schritt S3 wird nun sichergestellt, dass diese Phasensynchronisation anhand einer der nicht fehlerhaften Phasen L1', L2' und L3' vorgenommen wird. Dieses kann beispielsweise dadurch erfolgen, dass eine der nicht fehlerhaften Phasen L1', L2' und L3' als Eingangssignal für die Referenzspannungserzeugung aufgeschaltet wird.

In einem folgenden Schritt S4 gibt der Wechselrichter 10 über den Steueranschluss 14 ein Signal an die Schalteinrichtung 20, durch das die eine oder die mehreren fehlerhaften Phasen L1', L2' und L3' des übergeordneten Energieversorgungsnetzes 6 von der entsprechenden Phase L1, L2 und L3 des lokalen Energieverteilungsnetzes 2 getrennt wird.

Anschließend stellt der Wechselrichter 10 in einem Schritt S5 auf der oder den abgetrennten Phasen L1, L2 und L3 des lokalen Energieversorgungsnetzes 2 einen netzkonformen Wechselstrom bereit. Wie bereits im Zusammenhang mit Fig. 1 ausgeführt, wird die zur Versorgung der an diese Phasen angeschlossenen Verbraucher 3, 4 die benötigte Leistung bevorzugt aus der lokalen Energieversorgungseinrichtung, hier also aus dem PV-Generator 7. Eventuell überschüssige Energie wird auf die nicht fehlerhaften Phasen L1', L2' und L3' des Energieversorgungsnetzes 6 eingespeist. Dabei können bekannte Verfahren zum Ausgleich der auf diesen Phasen eingespeisten Leistungen unabhängig von dem Verbrauch durch die Verbraucher 3, 4 auf diesen Phasen eingesetzt werden. Falls die Leistung der lokalen Energieversorgungseinrichtung nicht zur Versorgung aller auf den abgetrennten Phasen L1, L2 und L3 des lokalen Energieverteilungsnetzes 2 ausreicht, wird entsprechend Energie aus den nicht fehlerhaften und nicht abgetrennten Phasen L1', L2' und L3' des Energieversorgungsnetzes 6 entnommen. Hierbei erfolgt dann der Austausch der Leistung von der mindestens einen nicht abgetrennten Phase, beim Beispiel der Fig. 1 also die Phasen L2, L3, in die mindestens eine abgetrennte Phase, im Beispiel die Phase L1, des lokalen Energieverteilungsnetzes über einen Zwischenkreis des Wechselrichters 10.

Hierbei kann zusätzlich Leistung aus der Batterie 8 entnommen werden, beispielsweise um zu verhindern, dass die mindestens eine nicht abgetrennte Phase andernfalls überlastet würde und Sicherungsorgane, die zwischen dem Energieversorgungsnetz 6 und dem lokalen Energieverteilungsnetz 2 angeordnet sind, auslösen würden. Auch kann verhindert werden, dass die Spannung nicht abgetrennter Phasen infolge der Belastung unerwünscht absinkt. Weiter kann durch eine Leistungsentnahme aus der Batterie 8 eine zu große Belastung von Schaltungsteilen des Wechselrichters 10, die den nicht abgetrennten Phasen zugeordnet sind, reduziert werden.

Während der Einspeisung im Schritt S5 wird im Schritt S6 wiederum der Status der Phasen L1', L2' und L3' des Energieversorgungsnetzes 6 und insbesondere der Status der zuvor als fehlerhaft erkannten Phasen bestimmt. Wenn in einem Schritt S7, in dem das Ergebnis des Schrittes S6 ausgewertet wird, festgestellt wird, dass die bislang als fehlerhaft erkannten Phasen L1', L2' und L3' nach wie vor fehlerbehaftet sind, verzweigt das Verfahren zurück zum Schritt S6.

Wird dagegen festgestellt, dass die bislang als fehlerhaft erkannten Phasen L1', L2' und L3' des übergeordneten Energieversorgungsnetzes 6 wieder korrekt und netzkonform bereitgestellt werden, wird das Verfahren mit einem Schritt S8 fortgesetzt, in dem vom Wechselrichter 10 über den Steueranschluss 14 die Schalteinrichtung 20 angewiesen wird, die nunmehr fehlerfrei bereitgestellten Phasen L1', L2' und L3' wieder mit der oder den entsprechenden Phasen L1, L2 und L3 des Energieversorgungsnetzes 2 zu verbinden, nachdem die Synchronisation des Wechselrichters 10 auf diese Phasen überprüft und sichergestellt worden ist. Anschließend kann der Wechselrichter 10 wiederum in einen Steuermodus für den Normalbetrieb geschaltet werden, indem beispielsweise von der lokalen Energieversorgungseinrichtung 7 erzeugte Leistung gleichmäßig auf alle Phasen verteilt wird oder in dem die Leistung so auf die drei Phasen L1, L2 und L3 verteilt wird, dass am Netzübergabepunkt 5 eine symmetrische Belastung der Phasen L1', L2' und L3' des übergeordneten Energieversorgungsnetzes 6 vorliegt. Das Verfahren kann dann entsprechend erneut von dem Schritt S1 ausgeführt werden.

In der Teilinselsituation in den Schritten S6 und S7 kann der Fall auftreten, dass sich die Anzahl von fehlerhaften Phasen erhöht oder erniedrigt. In einer alternativen Ausgestaltung des Verfahrens kann dieses berücksichtigt sein, indem ein Abkoppeln und Versorgen auf einer zusätzlich ausgefallenen Phase ebenso berücksichtigt wird, wie ein Wiederverbinden einer nicht mehr fehlerhaften Phase. Voraussetzung ist lediglich, dass noch zumindest eine Phase korrekt vom Energieversorgungsnetz bereitgestellt wird, die der Synchronisation der Phasenverläufe und damit Frequenzen für alle im lokalen Energieverteilungsnetz bereitgestellten Phasen dient und die ggf. überschüssige Leistung der lokalen Energieversorgungseinrichtung aufnimmt oder ggf. fehlende Leistung für die Verbraucher bereitstellt.

### Bezugszeichenliste

- 1: Gebäude
- 2: lokales Energieverteilungsnetz
- 3: einphasiger Verbraucher
- 4: dreiphasiger Verbraucher
- 5: Netzübergabepunkt
- 6: übergeordnetes Energieversorgungsnetz
- 7: Energieerzeugungseinrichtung (PV-Generator)
- 8: Energiespeicher (Batterie)
- 10: Wechselrichter
- 11,12: DC-Anschluss
- 13: AC-Anschluss
- 14: Steueranschluss (für AC-Schalteinrichtung)
- 15: Signalanschluss (für Netzüberwachungseinrichtung)
- 20: AC-Schalteinrichtung
- 30: Netzüberwachungseinrichtung

## Patentansprüche

1. Mehrphasige Energieversorgungsanlage mit mindestens einem Wechselrichter (10) mit mindestens einem DC-Eingang (11, 12) zur Verbindung mit einer Energieerzeugungseinrichtung (7) und/oder einer Batterie (8), mindestens einer Energieerzeugungseinrichtung (7) und/oder einer Batterie (8), einer Schalteinrichtung (20), über die die Energieversorgungsanlage an ein ebenfalls mehrphasiges übergeordnetes Energieversorgungsnetz (6) ankoppelbar ist, einer Netzüberwachungseinrichtung (30) und einem mehrphasigen AC-Ausgang (13) zur Verbindung mit einem lokalen Energieverteilungsnetz (2), **dadurch gekennzeichnet, dass**
- der Wechselrichter (10) einen Steueranschluss (14) zur Verbindung mit der Schalteinrichtung (20) aufweist, derart, dass über den Steueranschluss (14) selektiv einzelne Phasen (L1, L2, L3) des lokalen Energieverteilungsnetz (2) mit entsprechenden Phasen (L1', L2', L3') des Energieversorgungsnetzes (6) verbindbar sind bzw. voneinander trennbar sind, und
- der Wechselrichter (10) dazu eingerichtet ist, bei einem Netzfehler mindestens einer, aber nicht aller Phasen (L1', L2', L3') des Energieversorgungsnetzes (6) über den Steueranschluss (14) die mindestens eine fehlerbehaftete Phase (L1', L2', L3') des Energieversorgungsnetzes (6) von der entsprechenden Phase (L1, L2, L3) des lokalen Energieverteilungsnetz (2) zu trennen und
- die mindestens eine abgetrennte Phase (L1, L2, L3) des lokalen Energieverteilungsnetzes (2) mit netzkonformer Wechselspannung zu beaufschlagen und dabei von der Energieerzeugungseinrichtung (7) und/oder der Batterie (8) bereitgestellte Leistung zur Beaufschlagung der mindestens einen abgetrennten Phase (L1, L2, L3) des lokalen Energieverteilungsnetzes (2) zu verwenden.

2. Mehrphasige Energieversorgungsanlage nach Anspruch 1, bei der die Schalteinrichtung (20) in den Wechselrichter (10) integriert ist.

3. Mehrphasige Energieversorgungsanlage nach Anspruch 1 oder 2, bei der der Wechselrichter einen Signalanschluss (15) zur Verbindung mit der Netzüberwachungseinrichtung (30) aufweist, die zur selektiven Identifikation des Netzfehlers auf jeder einzelnen der Phasen (L1', L2', L3') des Energieversorgungsnetzes (6) eingerichtet ist.

4. Mehrphasige Energieversorgungsanlage nach Anspruch 3, bei der die Netzüberwachungseinrichtung (30) in den Wechselrichter (10) integriert ist.

5. Mehrphasige Energieversorgungsanlage nach einem der Ansprüche 1 bis 4, die dazu eingerichtet ist, Leistung zur Beaufschlagung der mindestens einen abgetrennten Phase (L1, L2, L3) des lokalen Energieverteilungsnetz (2) aus einer nicht abgetrennten Phase (L1, L2, L3) des lokalen Energieverteilungsnetzes (2) zu entnehmen.

6. Verfahren zum Betreiben eines Wechselrichters (10), der über mindestens einen DC-Eingang (11, 12) mit einer Energieerzeugungseinrichtung (7) und/oder einer Batterie (8) verbunden ist und über einen mehrphasigen AC-Ausgang (13) mit einem lokalen Energieverteilungsnetz (2) verbunden ist, das über eine Schalteinrichtung (20) an ein ebenfalls mehrphasiges übergeordnetes Energieversorgungsnetz (6) angekoppelt ist, mit den folgenden Schritten:
- Überwachen, ob bei mindestens einer Phase (L1', L2', L3'), aber nicht allen Phasen (L1', L2', L3') des Energieversorgungsnetzes (6) ein Netzfehler vorliegt;
- Betätigen der Schalteinrichtung (20) und Abtrennen der mindestens einen fehlerbehafteten Phase (L1', L2', L3') des Energieversorgungsnetzes (6) von der entsprechenden Phase (L1, L2, L3) des lokalen Energieverteilungsnetzes (2); und
- Beaufschlagen der mindestens einen abgetrennten Phasen (L1, L2, L3) des lokalen Energieverteilungsnetzes (2) mit netzkonformer Wechselspannung durch den Wechselrichter (10), wobei die benötigte Leistung von der Energieerzeugungseinrichtung (7) und/oder von der Batterie (8) entnommen und vom Wechselrichter (10) von Gleich- in Wechselstrom umgewandelt wird.

7. Verfahren nach Anspruch 6, bei dem ein Signal zur Betätigung der Schalteinrichtung (20) von dem Wechselrichter (10) ausgegeben wird.

8. Verfahren nach Anspruch 6 oder 7, bei dem überschüssige Leistung der Energieerzeugungseinrichtung (7) vom Wechselrichter (10) in nicht abgetrennte Phasen (L1, L2, L3) des lokalen Energieverteilungsnetzes (2) eingespeist wird.

9. Verfahren nach Anspruch 6 oder 7, bei dem fehlende Leistung zur Beaufschlagung der mindestens einen abgetrennten Phase (L1, L2, L3) des lokalen Energieverteilungsnetz (2) vom Wechselrichter (10) aus mindestens einer nicht abgetrennten Phasen (L1, L2, L3) des lokalen Energieverteilungsnetzes (2) entnommen und in die mindestens eine abgetrennte Phasen (L1, L2, L3) eingespeist wird.

10. Verfahren nach Anspruch 9, bei dem die Übertragung von Leistung aus der mindestens einen nicht abgetrennten Phase (L1, L2, L3) in die mindestens eine abgetrennte Phase (L1, L2, L3) des lokalen Energieverteilungsnetzes (2) über einen Zwischenkreis des Wechselrichters (10) erfolgt.

11. Verfahren nach Anspruch 9oder 10, bei dem die Entnahme von Leistung aus der Batterie (8) so gesteuert wird, dass die Belastung der nicht abgetrennten Phasen (L1, L2, L3) unter einem Belastungsschwellwert, insbesondere unter einer Auslöseschwelle einer Sicherung, verbleibt.

12. Verfahren nach einem der Ansprüche 9 bis 11, bei dem der Anteil der Leistung, die den nicht abgetrennten Phasen (L1, L2, L3) entnommen wird, in Abhängigkeit des Ladezustandes der Batterie (8) bzw. der Leistungsfähigkeit der Energieerzeugungseinrichtung (7), bzw. der Belastbarkeit von den nicht abgetrennten Phasen (L1, L2, L3) zugeordneten Leistungsteilen des Wechselrichters (10) bestimmt wird.

13. Mehrphasige Energieversorgungsanlage nach einem der Ansprüche 1 bis 5, **dadurch gekennzeichnet, dass** eine Steuereinrichtung vorgesehen ist, die dazu eingerichtet ist, abhängig von Signalen der Netzüberwachungseinrichtung (30) die Schalteinrichtung (20) und/oder den Wechselrichter zur Durchführung eines Verfahrens nach einem der Ansprüche 6 bis 12 anzusteuern.

## Claims

1. A multiphase power supply system with at least one inverter (10) with at least one DC input (11, 12) for connection to a power generating device (7) and/or a battery (8) of at least one power generating device (7) and/or a battery (8), a switching device (20), via which the power supply system can be connected to a superordinate multiphase power supply network (6), a grid monitoring device (30) and a multiphase AC output (13) for connection to a local energy distribution network (2), **characterized in that**
- the inverter (10) comprises a control terminal (14) for connecting to the switching device (20) such that individual phases (L1, L2, L3) of the local energy distribution network (2) can be selectively connected to or separated from corresponding phases (L1', L2', L3') of the power supply network (6) via the control terminal (14), and
- the inverter (10) is configured to separate, in case of a grid fault on at least one but not all phases (L1', L2', L3') of the power supply network (6), the at least one faulty phase (L1', L2', L3') from the corresponding phase (L1, L2, L3) of the local energy distribution network (2) via the control connection (14) of the power supply network (6), and
- to apply mains-compliant alternating voltage to the at least one separated phase (L1, L2, L3) of the local energy distribution network (2) and thereby to apply power provided by the energy generating device (7) and/or the battery (8) to the at least one separated phase (L1, L2, L3) of the local energy distribution network (2).

2. The multiphase power supply system according to claim 1, wherein the switching device (20) is integrated in the inverter (10).

3. The multi-phase power supply system according to claim 1 or 2, wherein the inverter comprises a signal terminal (15) for connecting to the grid monitoring device (30) and arranged to selectively identify the grid fault on each of the phases (L1', L2', L3') of the power supply network (6).

4. The multi-phase power supply system according to claim 3, wherein the grid monitoring device (30) is integrated in the inverter (10).

5. The multi-phase power supply system according to any one of claims 1 to 4, arranged to apply power to the at least one separated phase (L1, L2, L3) of the local energy distribution network (2) from a non-separated phase (L1, L2, L3) of the local energy distribution network (2).

6. A method for operating an inverter (10) connected via at least one DC input (11, 12) to an energy generating device (7) and/or a battery (8) and connected via a multiphase AC output (13) to a local energy distribution network (2) being coupled to a likewise superordinate multiphase power supply network (6) via a switching device (20), with the following steps:
- monitoring whether a grid fault is present in at least one phase (L1', L2', L3') but not in all phases (L1', L2', L3') of the power supply network (6);
- actuating the switching device (20) and disconnecting the at least one faulty phase (L1', L2', L3') of the power supply network (6) from the corresponding phase (L1, L2, L3) of the local energy distribution network (2); and
- applying grid-compliant alternating current by the inverter (10) to the at least one disconnected phase (L1, L2, L3) of the local energy distribution network (2), the required power being taken from the energy generating device (7) and/or from the battery (8) and converted from direct current to alternating current by the inverter (10).

7. The method according to claim 6, wherein a signal for actuating the switching device (20) is output from the inverter (10).

8. The method according to claim 6 or 7, wherein excess power of the power generating device (7) is fed from the inverter (10) into non-separated phases (L1, L2, L3) of the local energy distribution network (2).

9. The method according to claim 6 or 7, wherein lacking power for the at least one separated phase (L1, L2, L3) of the local energy distribution network (2) is taken from at least one non-separated phase (L1, L2, L3) and fed into the at least one separated phase (L1, L2, L3) of the local energy distribution network (2) by the inverter (10).

10. The method according to claim 9, wherein the transfer of power from the at least one non-separated phase (L1, L2, L3) into the at least one separated phase (L1, L2, L3) of the local energy distribution network (2) takes place via an intermediate circuit of the inverter (10).

11. The method according to claim 9 or 10, in which the extraction of power from the battery (8) is controlled such that the load of the non-separated phases (L1, L2, L3) remains below a load threshold value, in particular below a trip threshold of a fuse.

12. The method according to one of claims 9 to 11, wherein the portion of the power taken from the non-separated phases (L1, L2, L3) is determined as a function of the state of charge of the battery (8) or the power generation device (7) or the load capacity of the power sections of the inverter (10) assigned to the non-separated phases (L1, L2, L3).

13. The multiphase power supply system according to one of claims 1 to 5, **characterized in that** a control device is provided arranged to control the switching device (20) and/or the inverter in dependence on signals of the grid monitoring device (30) to perform a method according to one of claims 6 to 12.

## Revendications

1. Installation de distribution d'énergie multiphasée comprenant au moins un onduleur (10) qui comporte au moins une entrée CC (11, 12), destinée à être reliée à un dispositif de génération d'énergie (7) et/ou une batterie (8) d'au moins un dispositif de génération d'énergie (7) et/ou une batterie (8), un dispositif de commutation (20), par le biais de laquelle l'installation de distribution d'énergie peut être connectée à un réseau de distribution d'énergie (6) d'ordre supérieur lui aussi multiphasé, un dispositif de surveillance de réseau (30) et une sortie CA multiphasée (13) destinée à être reliée à un réseau de distribution d'énergie local (2), **caractérisée en ce que**
- l'onduleur (10) possède une borne de commande (14) destinée à être reliée au dispositif de commutation (20) de telle sorte que par le biais de la borne de commande (14), les phases individuelles (L1, L2, L3) du réseau de distribution d'énergie local (2) peuvent, sélectivement, être reliées aux phases correspondantes (L1', L2', L3') du réseau de distribution d'énergie (6) ou être déconnectées de celles-ci,
- l'onduleur (10) est conçu pour, en présence d'un défaut de réseau d'au moins une, mais pas de toutes les phases (L1', L2', L3') du réseau de distribution d'énergie (6), déconnecter par le biais de la borne de commande (14) l'au moins une phase (L1', L2', L3') qui présente un défaut du réseau de distribution d'énergie (6) de la phase (L1, L2, L3) correspondante du réseau de distribution d'énergie local (2) et
- alimenter l'au moins une phase (L1, L2, L3) déconnectée du réseau de distribution d'énergie local (2) avec une tension alternative conforme au réseau et utiliser ici la puissance mise à disposition par le dispositif de génération d'énergie (7) et/ou la batterie (8) pour l'alimentation de l'au moins une phase (L1, L2, L3) déconnectée du réseau de distribution d'énergie local (2).

2. Installation de distribution d'énergie multiphasée selon la revendication 1, dans laquelle le dispositif de commutation (20) est intégré dans l'onduleur (10).

3. Installation de distribution d'énergie multiphasée selon la revendication 1 ou 2, dans laquelle l'onduleur possède une borne de signal (15) destinée à être reliée au dispositif de surveillance de réseau (30), laquelle est conçue pour l'identification sélective du défaut de réseau sur chacune des phases (L1', L2', L3') individuelles du réseau de distribution d'énergie (6).

4. Installation de distribution d'énergie multiphasée selon la revendication 3, dans laquelle le dispositif de surveillance de réseau (30) est intégré dans l'onduleur (10).

5. Installation de distribution d'énergie multiphasée selon l'une des revendications 1 à 4, laquelle est conçue pour prélever la puissance destinée à alimenter l'au moins une phase (L1, L2, L3) déconnectée du réseau de distribution d'énergie local (2) depuis une phase (L1, L2, L3) non déconnectée du réseau de distribution d'énergie local (2).

6. Procédé pour faire fonctionner un onduleur (10), lequel est relié par le biais d'au moins une entrée CC (11, 12) à un dispositif de génération d'énergie (7) et/ou une batterie (8) et qui est relié par le biais d'une sortie CA multiphasée (13) à un réseau de distribution d'énergie local (2), lequel est connecté par le biais d'un dispositif de commutation (20) à un réseau de distribution d'énergie (6) d'ordre supérieur lui aussi multiphasé, comprenant les étapes suivantes :
- surveillance permettant de déterminer s'il y a présence d'un défaut de réseau au niveau d'au moins une phase (L1', L2', L3'), mais pas de toutes les phases (L1', L2', L3') du réseau de distribution d'énergie (6) ;
- actionnement du dispositif de commutation (20) et déconnexion de l'au moins une phase (L1', L2', L3') qui présente un défaut du réseau de distribution d'énergie (6) de la phase (L1, L2, L3) correspondante du réseau de distribution d'énergie local (2) ; et
- alimentation de l'au moins une phase (L1, L2, L3) déconnectée du réseau de distribution d'énergie local (2) avec une tension alternative conforme au réseau par l'onduleur (10), la puissance nécessaire étant prélevée du dispositif de génération d'énergie (7) et/ou de la batterie (8) et convertie par l'onduleur (10) de courant alternatif en courant continu.

7. Procédé selon la revendication 6, selon lequel un signal destiné à actionner le dispositif de commutation (20) est délivré par l'onduleur (10).

8. Procédé selon la revendication 6 ou 7, selon lequel la puissance en surplus du dispositif de génération d'énergie (7) est injectée par l'onduleur (10) dans des phases (L1, L2, L3) non déconnectées du réseau de distribution d'énergie local (2).

9. Procédé selon la revendication 6 ou 7, selon lequel la puissance manquante pour alimenter l'au moins une phase (L1, L2, L3) déconnectée du réseau de distribution d'énergie local (2) est prélevée par l'onduleur (10) d'au moins une phase (L1, L2, L3) non déconnectée du réseau de distribution d'énergie local (2) et injectée dans l'au moins une phase (L1, L2, L3) déconnectée.

10. Procédé selon la revendication 9, selon lequel la transmission de puissance depuis l'au moins une phase (L1, L2, L3) non déconnectée dans l'au moins une phase (L1, L2, L3) déconnectée du réseau de distribution d'énergie local (2) est effectuée par le biais d'un circuit intermédiaire de l'onduleur (10).

11. Procédé selon la revendication 9 ou 10, selon lequel le prélèvement de puissance depuis la batterie (8) est commandé de telle sorte que la charge des phases (L1, L2, L3) non déconnectées demeure au-dessous d'un seuil de charge, notamment au-dessous d'un seuil de déclenchement d'un fusible.

12. Procédé selon l'une des revendications 9 à 11, selon lequel la part de puissance qui est prélevée des phases (L1, L2, L3) non déconnectées est déterminée en fonction de l'état de charge de la batterie (8) ou de la capacité de puissance du dispositif de génération d'énergie (7), ou encore de la capacité de charge des parties de puissance de l'onduleur (10) qui sont associées aux phases (L1, L2, L3) non déconnectées.

13. Installation de distribution d'énergie multiphasée selon l'une des revendications 1 à 5, **caractérisée en ce qu'**un dispositif de commande est présent, lequel est conçu pour, en fonction de signaux du dispositif de surveillance du réseau (30), piloter le dispositif de commutation (20) et/ou l'onduleur en vue de mettre en oeuvre un procédé selon l'une des revendications 6 à 12.
